**Europäisches Patentamt**

**European Patent Office**

**Office européen des brevets**

(19)

(11) Veröffentlichungsnummer : **0 399 104 B1**

(12)

# EUROPÄISCHE PATENTSCHRIFT

(45) Veröffentlichungstag der Patentschrift :
**12.08.92 Patentblatt 92/33**

(51) Int. Cl.$^5$ : **F01K 3/24**

(21) Anmeldenummer : **89122671.4**

(22) Anmeldetag : **08.12.89**

(54) **Verfahren zur Verwendung von Müll als Brennstoff für umweltfreundliche Stromerzeugung.**

(30) Priorität : **22.05.89 AT 1218/89**

(43) Veröffentlichungstag der Anmeldung :
**28.11.90 Patentblatt 90/48**

(45) Bekanntmachung des Hinweises auf die
Patenterteilung :
**12.08.92 Patentblatt 92/33**

(84) Benannte Vertragsstaaten :
**AT BE CH DE ES FR GB GR IT LI LU NL SE**

(56) Entgegenhaltungen :
**CH-A- 375 024**
**DE-A- 2 131 347**
**DE-A- 2 216 927**
**DE-A- 3 330 122**

(73) Patentinhaber : **Sonnek, Rudolf**
**Gutenberggasse 7**
**A-8160 Weiz (AT)**
Patentinhaber : **Sonnek, Ingofried Rudolf,**
**Dipl.-Ing.**
**Oberfeistritz 88**
**A-8184 Anger (AT)**

(72) Erfinder : **Sonnek, Rudolf**
**Gutenberggasse 7**
**A-8160 Weiz (AT)**
Erfinder : **Sonnek, Ingofried Rudolf, Dipl.-Ing.**
**Oberfeistritz 88**
**A-8184 Anger (AT)**

EP 0 399 104 B1

Jouve, 18, rue Saint-Denis, 75001 PARIS

**Beschreibung**

Die gegenständliche Erfindung befaßt sich mit einem Verfahren zur Verwendung von Müll oder anderen Abfallstoffen als Brennstoff für umweltfreundliche Energiegewinnung und ist im wesentlichen dadurch gekennzeichnet, daß die aus einer Müll- oder Abfallverbrennungsanlage anfallende Energie in einem anderen kalorischen Prozeß, beispielsweise durch Zuführung von Dampf in den Niederdruckteil einer Dampfturbine zur Stromerzeugung verwendet wird, wobei der Betrieb des Hochdruckteils der Dampfturbine im Regelfall mit Dampf aus einer anderen Kraftwerkskesselanlage erfolgt und der Niederdruckteil der Dampfturbine sowohl vom Abdampf aus der Hochdruckturbine als auch vom Dampf aus dem Müll- oder Abfallverbrennungskessel beaufschlagt wird. Dieses Verfahren hat den Zweck, Dampf aus an sich bekannten Müll- oder Abfallverbrennungsanlagen in meist schon bestehenden kalorischen Kraftwerksanlagen zur Stromerzeugung zu verwenden. Durch die Einbindung in solche, von der Müllverbrennung auch unabhängig funktionierende, kalorische Anlagen zur Stromerzeugung kann mit einem Minimum an Investitionsaufwand eine optimale Nutzung bereits bestehender, oder nicht unmittelbar zur Müllverbrennung errichteter Anlagen zur Stromerzeugung erzielt werden.

Die Einspeisung des Dampfes aus der Müllverbrennungsanlage erfolgt vorzugsweise in den Niederdruckteil bzw. je nach Dampfzustand auch in einen gegebenenfalls vorhandenen Mitteldruckteil eines Dampfturbinenaggregates und kann parallel zur Einbringung des Abdampfes aus dem Hochdruckturbinenteil erfolgen. Überschüssige und nicht im vorher beschriebenen Prozeß verwendete Energie aus der Müllverbrennungsanlage kann darüberhinaus, in an sich bekannter Weise, zur Vorwärmung des Speisewassers bzw. zur Fernwärmeversorgung Verwendung finden, oder aber auch anderen, verfahrenstechnischen Prozessen zugeführt werden. Die bekannte Problematik der Müllverbrennung, im besonderen die Wahl der Standorte für solche Verbrennungsanlagen, wird durch die Einbindung der Energienutzung in bereits bestehende kalorische Kraftwerke wesentlich vereinfacht. Die dort ohnedies vorhandenen technischen und umweltschonenden Einrichtungen können auch für die Müllverbrennung genutzt werden, sodaß die Müllentsorgung bzw Müllverwertung kostengünstig erfolgen kann.

Das Rauchgas aus der Müll- und Abfallverbrennungsanlage wird über eine Vorreinigungsanlage (Filter) geleitet und anschließend der Verbrennungsluft der Kraftwerkskesselbefeuerungsanlage zugeführt, um die eventuellen noch enthaltenen brennbaren Stoffe in verwertbare Energie umzuwandeln und Schadstoffe abzubauen bzw. durch nachgeschaltete Filteranlagen auszuscheiden.

Einrichtungen und Anlagen zur Müllverbrennung mit anschließender Stromerzeugung sind bekannt und vielfach in Betrieb. Solche Anlagen werden jedoch durch die Art des Brennstoffes in ihren Leistungsbereichen, soweit dies Dampfdruck und Dampftemperatur betrifft, stark eingeschränkt. Sinnvoll und wirtschaftlich zweckmäßig sind nur Müllverbrennungsanlagen, die mit relativ niedrigen Dampfdrücken und Temperaturen betrieben werden. Die Verwendung des Dampfes aus solchen Anlagen zur Stromerzeugung erfolgt daher zweckmäßig in Dampfturbinen, wie sie - von der Auslegung her - den Mittel- oder Niederdruckturbinen großer kalorischer Kraftwerke entsprechen.

Es sind verschiedene Kombination von Müllverbrennungs- und Kraftwerksanlagen bekannt geworden. In der Deutschen Offenlegungsschrift 2131347 wird eine Dampfkesselanlage mit einem zusätzlich mit Müll beheizten Kessel beschrieben, wobei die Dampfturbine sowohl vom Hauptkessel, als auch vom Müllkessel mit Dampf gespeist wird, der Dampf aus dem Müllkessel jedoch vor der Einspeisung in die Dampfturbine, in einem dem Hauptkessel angehörenden Zwischenüberhitzer eingeleitet wird, sodaß ein funktioneller Zusammenhang zwischen Müllkessel und Hauptkessel besteht.

Mit der Deutschen Offenlegungsschrift 2216927 wird auch eine Kombination von Müllverbrennungs- und Kraftwerksanlage beschrieben, bei welcher das Speisewasser für den Kraftwerkskessel durch die Müllverbrennungsanlage teilweise vorgewärmt wird und die Müllverbrennungs- und Kraftwerksanlage, räumlich getrennt voneinander, in separaten Gebäuden aufgestellt sind. Die Rauchgasströme aus beiden Anlagen werden erst am gemeinsamen Schornsteineintritt zusammengeführt.

Die Deutsche Offenlegungsschrift DE 3330122 A1 behandelt eine Müllverbrennungsanlage mit einem Verfahren zur Schadstoffreduktion, wobei die Verdampferstufe eines Müllverbrennungskessels in eine Überhitzerstufe eines nachgeschalteten Wirbelbettbrennkammersystems mündet und dort unter Beigabe von Chemie-Sorbitionsmittelgemischen, die Rauchgase von sauren Schadstoffen befreit werden, wobei im Wirbelbettbrennkammersystem auch die Überhitzung des aus dem Müllverbrennungskessel kommenden Dampfes erfolgt.

Das Schweizer Patent Nr. 375024 beschreibt ein thermisches Kraftwerk mit einem Hochleistungskessel und einer Müllverbrennungsanlage, bei dem die Heizflächen der beiden Kesselanlagen im Bereich des Arbeitsmediums (Dampf) in Serie geschaltet sind. Im besonderen wird im Unteranspruch darauf hingewiesen, daß die Heizflächen der Müllverbrennungsanlage ausschließlich entweder zur Vorwärmung, zur Verdampfung, zur Nachverdampfung, zur Überhitzung oder zur Zwischenüberhitzung des Kesselarbeitsmediums dienen.

Bei all diesen vorher genannten Kraftwerksanlagen und Verfahren besteht zwischen dem Müllverbrennungskessel und der Kraftwerkskesselanlage auf der Dampfseite ein funktioneller Zusammenhang.

Die gegenständliche Erfindung sieht dampfseitig zwischen dem Müllverbrennungskessel und dem Kraftwerkskessel keine Verbindung vor und schlägt die Nutzung der bei den kalorischen Kraftwerken ohnedies vorhandenen Einrichtungen für die Verwertung des Dampfes aus Müllverbrennungsanlagen vor. Der aus der Müllverbrennungsanlage gewonnene Dampf mit niedrigen oder mittleren Druck- und Temperaturverhältnissen wird den Nieder- oder Mitteldruckteil der Dampfturbinenanlage zugeführt und über die einzelnen Stufen dieser Dampfturbine bis auf den Kondensationsdruck abgearbeitet und in bekannter Weise zum Antrieb eines Generators verwendet, der im entsprechenden Ausmaß elektrischen Strom erzeugt.

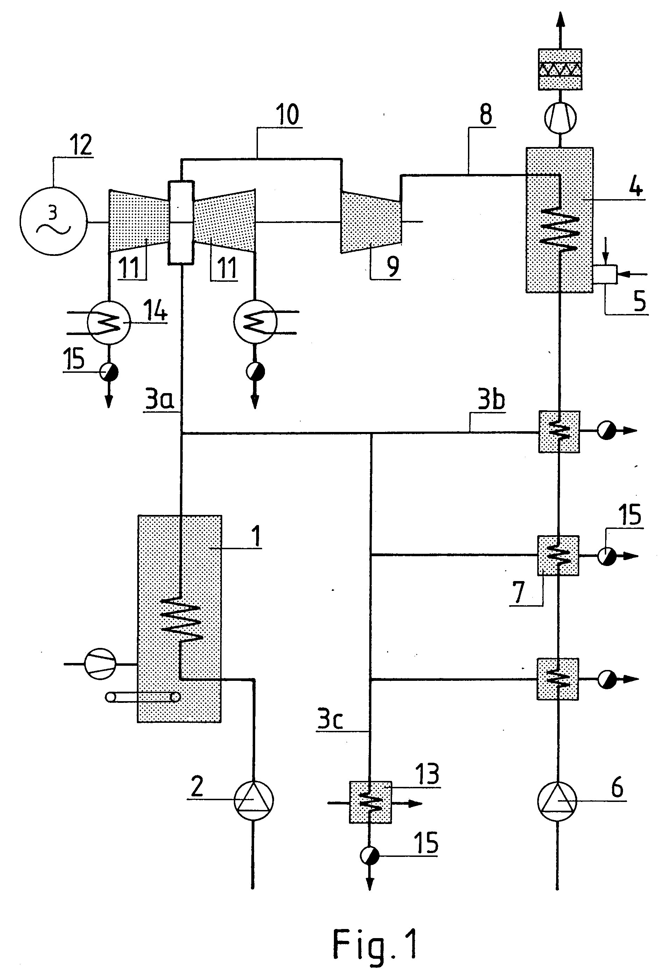

In der beiliegenden Zeichnung, Fig. 1, ist schematisch eine solche Nutzung beispielhaft dargestellt.

Der Müllverbrennungskessel 1, mit Müll oder anderen Abfällen befeuert, wird von der Niederdruckspeisepumpe 2 mit Kesselspeisewasser versorgt und der gewonnene Niederdruckdampf in das Niederdruckdampfleitungsnetz 3a, 3b, 3c aus dem Dampfkessel abgeleitet. Über die Niederdruckdampfleitung 3a wird der Dampf aus dem Müllverbrennungskessel 1 dem Niederdruckteil 11 der Dampfturbinenanlage zugeführt oder über Rohrleitungen 3b und 3c entweder zur Anspeisung der Speisewasser-Vorwärmer 7 oder zur Versorgung sonstiger verfahrenstechnischer Einrichtungen 13 verwendet. Das Kondensat aus den vorher beschriebenen Anlagenteilen wird über die Kondensatableitung 15, in einen zeichnerisch nicht dargestellten Kondensatsammelbehälter, abgeleitet.

Im Kraftwerkskessel 4 wird durch die Kesselbefeuerungseinrichtung 5 Dampf in bekannter Weise mit hohem Druck und hoher Temperatur erzeugt, der über die Hochdruckdampfleitung 8 die Hochdruckdampfturbine 9 antreibt und anschließend durch die Überströmleitung 10 in die Niederdruckdampfturbine 11 abströmt, die ihrerseits auch über die Dampfleitung 3a mit dem Abdampf aus der Müllverbrennungsanlage beaufschlagt wird.

Der sowohl aus den Dampfkesseln 1 und 4 kommende Dampf wird nach Abarbeitung des Druck- und Temperaturgefälles in den Dampfturbinen in den Kondensatoren 14 niedergeschlagen und das anfallende Kondensat über die Kondensatableitung 15, wie schon vorher beschrieben, in den zeichnerisch nicht dargestellten Kondensatsammelbehälter geleitet. Der Generator 12 der von den Dampfturbinen 9 und 11 angetrieben wird, erzeugt elektrischen Strom.

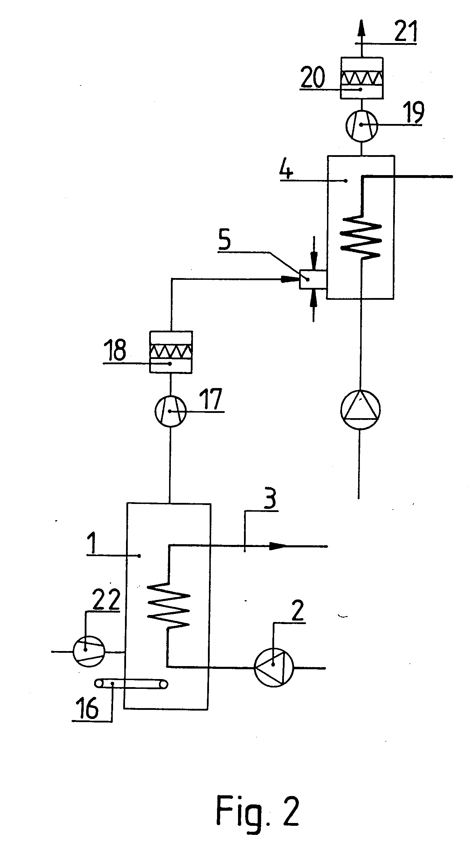

In Fig. 2 ist die rauchgasseitige Verbindung zwischen einer Müllverbrennungsanlage und einem Dampfkessel eines kalorischen Kraftwerkes beispielhaft dargestellt.

Der Müllverbrennungskessel 1 wird über die Verbrennungsvorrichtung 16 mit Müll befeuert. Das Gebläse 22 sorgt für die Zuführung der notwendigen Verbrennungsluft. Über die Niederdruckspeisepumpe 2 wird die Zubringung des Kesselspeise-wassers bewerkstelligt und der Niederdruckdampf verläßt über eine Rohrleitung 3 den Müllverbrennungskessel. Aus diesem wird durch das Gebläse 17 das Rauchgas abtransportiert und in der Filteranlage 18 vorgereinigt, bevor es der Befeuerungseinrichtung 5 des Kraftwerkskessels 4 zugeführt wird. Gemeinsam mit dem Abgas aus dem Kraftwerkskessel 4 verläßt es als Rauchgasgemisch über das Saugzuggebläse 19 und die Rauchgasreinigungsanlage 20 über den Schornstein 21 im weitgehend gereinigten Zustand die Kraftwerksanlage.

**Patentansprüche**

1. Verfahren zur Verwendung von Müll oder anderen Abfallstoffen als Brennstoff für umweltfreundliche Energieerzeugung, dadurch gekennzeichnet, daß der in der Müll- oder Abfallverbrennungsanlage (1) erzeugte Dampf, unbeeinflußt vom Kraftwerkskessel (4), in den Mittel- oder Niederdruckteil (11) einer kalorischen Kraftwerksturbinenanlage eingespeist und damit zur Erzeugung von elektrischem Strom verwendet wird.

2. Verfahren nach Anspruch 1 dadurch gekennzeichnet, daß für den Betrieb des Hochdruckteils der Dampfturbine, Dampf aus der Kraftwerkskesselanlage (4) zugeführt wird.

3. Verfahren nach Anspruch 1 und 2 dadurch gekennzeichnet, daß vom Abdampf aus dem Hochdruckteil (9) der Dampfturbine in an sich bekannter Weise über eine oder mehrere Rohrleitungen (10) der Niederdruckteil (11) der Dampfturbine beaufschlagt und parallel dazu oder direkt in die Rohrleitungen (10) immer oder zeitweise Niederdruckdampf aus einem anderen Dampfkessel (1), vorzugsweise mit Müll oder anderen Abfällen befeuert, eingeleitet wird.

4. Verfahren nach Anspruch 1, 2 und 3 dadurch gekennzeichnet, daß überschüssiger, nicht für die Stromerzeugung erforderlicher Dampf aus der Müll- oder Abfallverbrennungsanlage (1) für andere, an sich bekannte thermische Verfahren, z. B. Speisewasservorwärmung (7), Fernwärmeversorgung oder auch für den Betrieb anderer verfahrenstechnischer Einrichtungen (13) verwendet wird.

5. Verfahren nach Anspruch 1 - 4, dadurch gekennzeichnet, daß das Rauchgas aus der Müll- und Abfall-

EP 0 399 104 B1

verbrennungsanlage (1) über eine Filteranlage (18) vorgereinigt und in der Folge der Befeuerungsanlage (5) des Kraftwerkskessels (4) zugeführt und nachverbrannt wird.

**Claims**

1. Process for the utilization of refuse or other wastes as fuel for clean energy production characterized in that the steam produced in the refuse or waste incineration plant (1) is fed uninfluenced by the boiler of the power plant (4) into the medium-pressure or low-pressure section (11) of the turbine unit of a fuelled power station, whereby the steam is used for the production of electricity.

2. Process according to claim 1 characterized in that for the operating of the turbine's high-pressure section, steam is fed to it from the boiler plant of the power station.

3. Process as set forth in claim 1 and 2 characterized in that the steam spent in the high-pressure section (9) of the steam turbine is admitted in per se known manner via one or several conduits of pipes (10) to the low-pressure section (11) of the steam turbine and that always or only at tines low-pressure steam from another steam boiler (1), preferably fuelled with refuse or other wastes, is fed in, parallel to or directly into the conduits of pipes (10).

4. Process as claimed in claim 1, 2 and 3 characterized in that excess steam from the refuse or waste incineration plant (1), which is not required for the production of electricity, is utilized for thermal processes known in themselves, e.g. for the pre-heating of feed-water (7), for long-distance heating, or also for the operating of other process installations (13).

5. Process as claimed in any of the claims 1-4 characterized in that the flue gas from the refuse and waste incineration plant (1) is subjected to preliminary filtering in filtering installations (18) and is subsequently fed into the fuelling (5) of the power station's boiler (4) and thereby is subjected to post-combustion.

**Revendications**

1. Procédé d'utilisation d'ordures ou de tout déchet comme combustible pour la production d'énergie favorable à l'énvironnement, la vapeur produite dans l'installation d'incinération des ordures (1) étant acheminée, indépendamment du générateur de vapeur (4), vers la partie moyenne ou basse pression d'une centrale calorifique à turbines (11) en vue de la production d'énergie électrique.

2. Procédé selon spécification 1 consiste à alimenter la partie haute pression de la turbine à vapeur par de la vapeur provenant du générateur de vapeur (4).

3. Procédé selon spécifications 1 et 2 consiste à alimenter la partie basse pression (11) de la turbine à vapeur avec de la vapeur d'échappement de la partie haute pression (9) de la turbine à vapeur, par une ou plusieurs conduites (10) selon la manière connue; ces conduites améneront de façon parallèle ou directement, en permanence ou à certains moments, de la vapeur à basse pression provenant d'un autre générateur (1), de préférence à base d'ordures ou d'autres déchets.

4. Procédé selon spécification 1, 2 et 3, consiste à utiliser la vapeur superflue dans la production d'énergie, produite par l'installation d'incinération des ordures (1), pour d'autres procédés thermiques connus, p.ex. le préchauffage d'eau d'alimentation (7), la chaleur à distance ou l'exploitation d'autres installations industrielles (13).

5. Procédé selon spécifications 1 - 4, consiste à épurer préalablement par un filtre (18) le gaz de fumée produit par l'incinération d'ordures (1), et de l'admettre vers la chaufferie (5) du générateur de la centrale (4) où il sera soumis à un traitement de post-combustion.

Fig.1

Fig. 2